# FASCICULE DE BREVET EUROPEEN

(11) **EP 2 046 557 B1**
(45) Date de publication et mention de la délivrance du brevet: **10.02.2010**
(21) Numéro de dépôt: 07788868.3
(22) Date de dépôt: 11.06.2007
(51) Int. Cl.: B29C 63/16, B29C 63/22, B29D 11/00, B30B 5/02

(54) **APPAREIL D'APPLICATION D'UN REVÊTEMENT SUR UNE LENTILLE COMPORTANT DES MOYENS DE GONFLAGE D'UNE MEMBRANE**
VORRICHTUNG ZUM AUFBRINGEN EINES ÜBERZUGS AUF EINE LINSE MIT MITTELN ZUM AUFBLASEN EINER MEMBRAN
DEVICE FOR APPLYING A COATING TO A LENS COMPRISING MEANS FOR INFLATING A MEMBRANE

(30) Priorité: 04.08.2006 FR 0607144
(43) Date de publication de la demande: 15.04.2009
(73) Titulaire: Essilor International (Compagnie Générale D'Optique), 94220 Charenton le Pont (FR)
(72) Inventeur: BARANTON, Konogan, 94227 Charenton (FR); JOUFFROY, Hervé, 94220 Charenton le Pont (FR); HADDADI, Ahmed, 94227 Charenton (FR); MAHONEY, Sean, 33709 St Petersbourg (US)
(74) Mandataire: Chauvin, Vincent
(86) Numéro de dépôt international: PCT/FR2007/000963
(87) Numéro de publication internationale: WO 2008/015320

(56) Documents cités:
- WO-A-97/35216
- WO-A-03/004255
- US-B1- 6 435 242

## Description

### DOMAINE TECHNIQUE AUQUEL SE RAPPORTE L'INVENTION

La présente invention concerne de manière générale la fabrication de lentilles ophtalmiques correctrices et/ou solaires de lunettes. Elle vise plus particulièrement un appareil d'application d'un revêtement sur une lentille comportant des moyens de gonflage d'une membrane.

### ARRIERE-PLAN TECHNOLOGIQUE

Afin d'améliorer les propriétés physiques et/ou optiques d'une lentille ophtalmique, il est connu de revêtir ses faces principales d'une ou plusieurs couches de traitement présentant les propriétés physiques ou optiques souhaitées, sur une face ou les deux faces de la lentille. Habituellement on procède par trempage de la lentille dans un bain ou par centrifugation du revêtement sous forme liquide, ou encore par dépôt sous vide de couches minérales ou organiques.

Récemment, il a été envisagé d'utiliser des revêtements solides qui se présentent sous forme de film initialement porté par un support et qui sont transférés par collage sur la face concernée de la lentille. Une difficulté consiste alors à appliquer le revêtement porté par son support contre la face concernée de la lentille de manière à, d'une part, éviter d'emprisonner des bulles d'air entre le revêtement en cours d'application et la lentille et, d'autre part, bien étaler la colle sur toute la surface de la lentille pour la répartir de façon sensiblement uniforme, sans zone d'épaisseur nulle ou de surcharge de colle. Il convient également d'obtenir une épaisseur de colle adaptée à la bonne tenue du revêtement sur la lentille et à la préservation des propriétés optiques de la lentille.

Le document WO03004255 propose, dans son mode de réalisation illustré par les figures 3A et 3B, un appareil pour appliquer sur une face d'une lentille ophtalmique un film de revêtement, porté par un support. L'appareil comporte un siège pour accueillir la lentille et des moyens de gonflage d'une membrane. Le support est mis en place avec son film de revêtement sur la face de la lentille, avec une interface qui est disposée entre le film de revêtement et la lentille. Puis la membrane est gonflée en direction de la lentille pour plaquer le film de revêtement contre la lentille.

Cependant, on observe qu'à partir d'un certain nombre de cycles de gonflage de la membrane, les propriétés de déformation élastique de la membrane se dégradent. En outre, lors de l'application de la membrane sur le support du film du revêtement, pour étaler la colle entre le film du revêtement et la lentille, la colle chassée sur les côtés de la lentille peut se retrouver sur la membrane, ce qui est préjudiciable car la membrane est alors encrassée et voit de plus ses propriétés de déformation élastique modifiées.

Il en résulte que la membrane risque de ne pas se déformer comme souhaité et que le revêtement risque de ne pas être appliqué uniformément et sans bulles d'air sur la lentille.

### OBJET DE L'INVENTION

Le but de la présente invention est de permettre l'application correcte du film de revêtement sur la lentille.

A cet effet, l'invention propose un appareil pour appliquer sur une face d'une lentille un film de revêtement préalablement déposé sur la face concernée de la lentille, comportant :
- un siège apte à accueillir la lentille,
- une membrane comprenant une partie périphérique de maintien et une partie gonflable,
- des moyens de gonflage de la membrane en direction du siège de lentille,
dans lequel les moyens de gonflage comportent une première plaque et une seconde plaque entre lesquelles est disposée la membrane, la première plaque présentant, en renfoncement, une chambre de pressurisation reliée à une source de gaz comprimé et la seconde plaque présentant une ouverture de protrusion, et comportant des moyens de liaison mécanique des plaques entre elles permettant leur mobilité relative entre une configuration d'ouverture dans laquelle les deux plaques sont écartées l'une de l'autre pour permettre l'insertion ou le remplacement de la membrane et une configuration de fermeture dans laquelle les deux plaques sont plaquées l'une contre l'autre de telle manière que, d'une part, la chambre de pressurisation de la première plaque et l'ouverture de protrusion de la seconde plaque soient situées en regard de la partie gonflable de la membrane, et que, d'autre part, la partie périphérique de maintien de la membrane soit maintenue par pincement entre les deux plaques, les moyens de liaison mécanique des plaques étant tels que la liaison mécanique qu'ils exercent est conservée en configuration d'ouverture.

Un tel appareil permet de changer aisément la membrane des moyens de gonflage au bout d'un nombre donné de cycles d'utilisation, de manière à conserver de bonnes propriétés de déformation pour la membrane, afin de permettre l'application correcte du film de revêtement sur la lentille.

Le changement de la membrane est rapide puisqu'il suffit de déplacer la première plaque des moyens de gonflage. La partie de maintien de la membrane n'est alors plus maintenue par serrage entre les deux plaques et peut donc être retirée. En outre, le maintien de la membrane dans le dispositif de gonflage est facilité puisque, lors de la fermeture des moyens de gonflage, la partie de maintien de la membrane est prise en sandwich entre les deux plaques.

Un tel appareil peut également servir à changer aisément tout autre élément amovible des moyens de gonflage qui participe au gonflement de la membrane suivant l'intensité et la répartition de pression souhaitées, tels que des éléments de guidage de la déformation de la membrane.

Selon une première caractéristique avantageuse de l'invention, les deux plaques sont montées pour pivoter l'une par rapport à l'autre entre leurs configurations d'ouverture et de fermeture.

Les moyens de gonflage peuvent ainsi être aisément ouvert à la manière d'un gaufrier en faisant pivoter la partie supérieure autour de la partie inférieure.

Selon une autre caractéristique avantageuse de l'invention, il est prévu des moyens de verrouillage et de serrage des deux plaques dans leur configuration de fermeture. Avantageusement alors, les moyens de verrouillage et de serrage sont distincts des moyens de liaison mécanique des plaques.

Selon une autre caractéristique avantageuse de l'invention, l'ouverture de protrusion de la seconde plaque est évasée vers la membrane. En particulier, l'ouverture de protrusion de la seconde plaque est tronconique.

La partie conique tronquée permet, d'une part, de guider la déformation de la membrane suivant la direction souhaitée, par exemple l'axe de la lentille. D'autre part, l'angle de cône et le diamètre des parties tronquées du cône agissent sur la cambrure de la partie de gonflage de la membrane, ce qui permet de répartir de la manière souhaitée la pression exercée par la membrane sur la lentille.

Selon une autre caractéristique avantageuse de l'invention, l'ouverture de protrusion est ménagée dans un insert amovible rapporté sur la seconde plaque.

Selon une autre caractéristique avantageuse de l'invention, il est prévu plusieurs inserts présentant des ouvertures de protrusion de différentes largeurs.

L'articulation des plaques du dispositif de gonflage facilite le remplacement des inserts. Il est ainsi aisé pour l'opérateur de choisir les inserts en fonction des caractéristiques de la lentille et/ou du support du film du revêtement. Selon une autre caractéristique avantageuse de l'invention, la première plaque comporte un hublot vitré délimitant partiellement au moins la chambre de pressurisation et apte à transmettre un rayonnement ultraviolet.

Selon une autre caractéristique avantageuse de l'invention, les deux plaques forment un sous-ensemble extractible.

La mobilité des moyens de gonflage par rapport à l'appareil facilite encore plus le remplacement de la membrane des moyens de gonflage puisqu'il permet de déplacer les moyens de gonflage dans une zone d'encombrement réduit où ils peuvent être aisément ouvert.

Selon une autre caractéristique avantageuse de l'invention, le sous-ensemble extractible formé par les deux plaques est monté sur des glissières de manière à s'insérer et s'extraire d'un logement d'accueil associé à la façon d'un tiroir.

### DESCRIPTION DETAILLEE D'UN EXEMPLE DE REALISATION

La description qui va suivre en regard des dessins annexés d'un mode de réalisation, donné à titre d'exemple non limitatif, fera bien comprendre en quoi consiste l'invention et comment elle peut être réalisée.

Dans les dessins annexés :
- la figure 1 est une vue d'ensemble en perspective d'un dispositif de préparation et de transfert d'un revêtement ;
- la figure 2 est une vue en perspective d'un appareil de réception et de distribution d'une lentille appartenant au dispositif de préparation et de transfert de revêtement ;
- la figure 3 est une vue en perspective d'une partie d'un appareil appartenant au dispositif pour appliquer sur la face de la lentille ophtalmique le revêtement ;
- la figure 4 est une vue schématique de l'appareil pour appliquer sur la face de la lentille ophtalmique le revêtement.

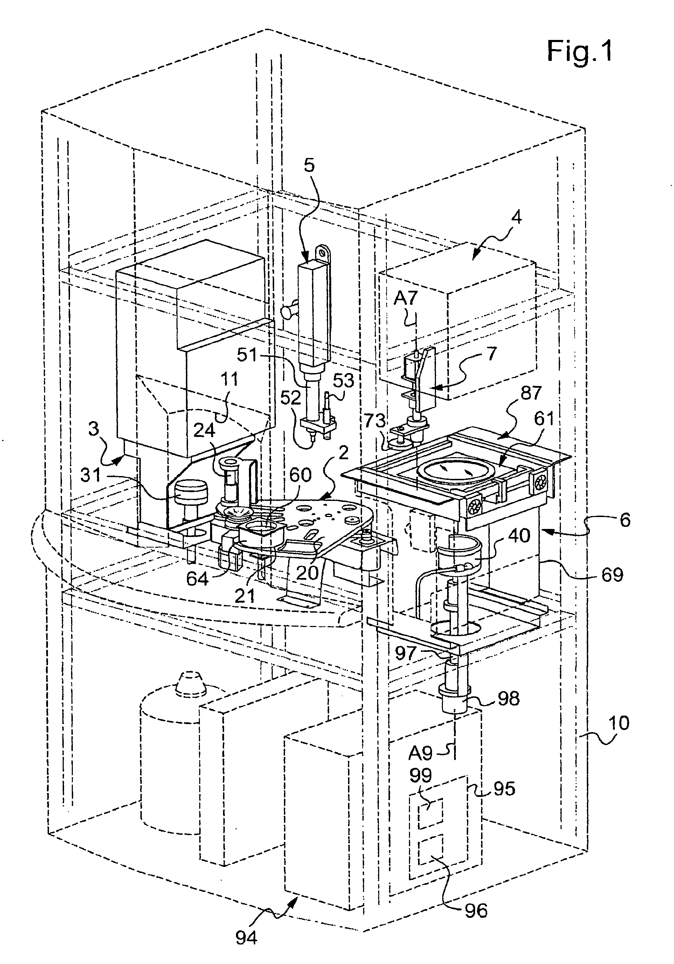

Sur la figure 1, on a représenté un dispositif de préparation et de transfert d'un revêtement 63 sur une face 108 d'une lentille 100. Par lentille, on entend un élément optique tel qu'un verre de lunettes correcteur ou non, une lentille d'instrument, etc. Ici, la face 108 de la lentille 100 sur laquelle est destiné à être appliqué le revêtement 63 est la face concave 108 de la lentille 100. Le revêtement 63 est un revêtement hydrophobe d'une épaisseur d'environ 50 micromètres.

Le revêtement 63 à transférer se présente typiquement sous la forme d'un film qui est initialement porté par un support 60 permettant sa manipulation et son conditionnement. Le support 60 est par exemple constitué par une plaquette de faible épaisseur en matière organique et est en l'espèce élastiquement flexible.

Ce dispositif de préparation et de transfert comporte tout d'abord un châssis 10 et une zone de chargement et de déchargement définie par une ouverture 11, ou porte, destinée, d'une part, au chargement de la lentille 100 et du support 60 portant le revêtement 63 avec son emballage 64, et, d'autre part, au déchargement de la lentille 100 une fois le revêtement déposé sur la lentille 100.

Pour le transfert du revêtement sur la lentille 100, le dispositif de préparation et de transfert comporte les appareils suivants :
- un appareil de manipulation 7 du revêtement 63 pour saisir le revêtement et le déposer sur la face concave de la lentille,
- un appareil de nettoyage 3 de la lentille 100,
- un appareil de dépôt de colle 5 sur la face de la lentille 100 et/ou sur le revêtement 63,
- un appareil 6 pour appliquer sur la face de la lentille ophtalmique le revêtement 63, encore appelé appareil d'application 6, et
- un appareil de réception et de distribution 2 d'une lentille 100 apte à véhiculer la lentille 100 d'un appareil à l'autre.

Le dispositif comporte également un appareil de durcissement 4 de la colle. Il est enfin prévu pour permettre le fonctionnement coordonné de l'ensemble de ces appareils une unité de traitement électronique 94.

Ces appareils sont décrits plus en détail ci-dessous.

### L'appareil de distribution

L'appareil de réception et de distribution 2 de la lentille 100 comporte essentiellement un carrousel 20 qui possède une mobilité de pivotement PIV1 autour d'un premier axe de pivotement A1.

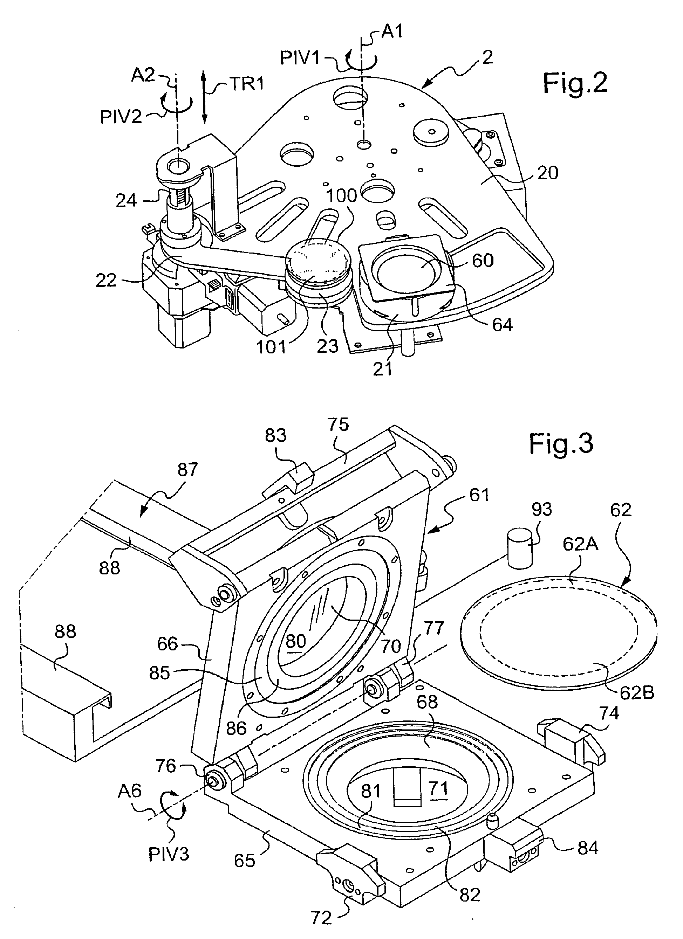

Comme représenté sur la figure 2, le carrousel 20 comprend un logement 21 adapté à recevoir le support 60 du revêtement 63 disposé dans son emballage 64. L'emballage 64 comprenant le support 60 de revêtement 63 repose dans le logement 21 avec la face supérieure 60A, opposée à la face inférieure 60B qui porte le revêtement 63, tournée vers l'extérieur de l'emballage 64, c'est-à-dire vers le haut sur le dessin de la figure 2.

Le carrousel 20 comporte également une fourchette 22 qui possède une mobilité de pivotement PIV2 autour, et une mobilité de translation TR1 le long, de l'axe A2 d'une potence 24 solidaire du carrousel 20. Cette fourchette possède également un logement 23.

### L'appareil de manipulation du revêtement

L'appareil de manipulation 7 du revêtement comporte un moyen de préhension 73 constitué ici par une ventouse déplaçable verticalement le long d'un axe A7. Le moyen de préhension 73 est monté de manière décentrée par rapport à l'axe A7 et possède également une mobilité de pivotement autour de cet axe A7.

### L'appareil de nettoyage de la lentille

L'appareil de nettoyage 3 comporte une entrée destinée à permettre le chargement de la lentille et de son bloc de maintien sur une embase de lavage 31. Cette embase est conçue pour, d'une part, maintenir la lentille et, d'autre part, conserver l'orientation de la lentille par exemple en étant pourvu, comme le logement 21 du carrousel, d'une forme complémentaire de l'élément de détrompage du bloc de maintien. Cet appareil comporte enfin des moyens de lavage tels que des moyens de pulvérisation de jets d'eau ainsi que des moyens de mise en rotation de l'embase de manière à sécher la lentille par centrifugation.

### L'appareil de dépôt de colle

L'appareil de dépôt de colle 5 comporte une seringue motorisée 51 de distribution d'une colle 46 durcissable par exposition aux rayons ultraviolets UV. Cette seringue est apte à délivrer un volume et un débit précis de colle. L'appareil de dépôt de colle 5 comporte également un capteur thermique et hygrométrique 53.

### L'appareil de durcissement de la colle

L'appareil de durcissement 4 de la colle 46 est positionné au-dessus (voir figure 1) de l'appareil d'application 6 du revêtement 63 et comporte des moyens de génération de rayons ultraviolets UV, en utilisant par exemple du gaz Xénon. Il est agencé avec l'appareil d'application 6 pour pouvoir exposer la colle 46 à ces rayons ultraviolets UV de manière à entraîner le durcissement de cette colle 46 entre le revêtement et la lentille. L'épaisseur de la couche finale de colle 46 est comprise entre 3 et 20 micromètres avec des résultats particulièrement probants pour une épaisseur de colle de 8 micromètres environ.

En variante, on peut prévoir d'utiliser une colle thermo-durcissable et donc de remplacer l'appareil d'exposition de la colle aux rayons ultraviolets par un appareil permettant de chauffer la colle disposée entre la lentille et le revêtement pour la durcir.

### Unité de traitement électronique et informatique

Le dispositif de préparation et de transfert comprend une unité de traitement électronique et informatique 94 qui contient un programme d'exécution du procédé de préparation et de transfert qui sera décrit plus loin.

### L'appareil pour appliquer le revêtement

L'appareil d'application 6 du revêtement 63 comporte tout d'abord un siège de lentille 40. La lentille 100 étant pourvue d'un bloc de maintien 101 matérialisant son référentiel, le siège de lentille 40 est apte à recevoir le bloc de maintien 101 sur lequel est maintenue la lentille. Le siège de lentille 40 est ici constitué d'un mandrin adapté à serrer et maintenir plusieurs types de blocs de maintien.

Comme représenté sur la figure 3, l'appareil d'application 6 comporte également une membrane 62 et des moyens de gonflage 61 de la membrane 62 en direction du siège de lentille 40. La membrane présente une partie gonflable 62B et une partie de maintien 62A.

Les moyens de gonflage 61 comportent une première plaque 66, ou plaque supérieure, et une seconde plaque 65, ou plaque inférieure, entre lesquelles est disposée la membrane 62.

La plaque supérieure 66 présente, en renfoncement, une chambre de pressurisation 80 reliée à une source de gaz comprimé 93. La chambre de pressurisation 80 peut ainsi être mise sous pression à une valeur donnée comprise entre 1 et 3 bars, et de préférence 2 bars.

La plaque supérieure 66 comporte également un hublot vitré 70 délimitant partiellement la chambre de pressurisation 80 et apte à transmettre un rayonnement ultraviolet UV. La membrane est elle aussi conçue (en matériau transparent par exemple), de manière à laisser passer les rayons ultraviolets.

La plaque inférieure 65 comporte une ouverture centrale traversante et, ici, un insert amovible qui définit une ouverture de protrusion 71 est rapporté dans cette ouverture centrale traversante. L'ouverture de protrusion 71 est évasée vers la membrane 62. En particulier ici, l'ouverture de protrusion 71 de la plaque inférieure 65 est tronconique. La plus petite section du cône peut affleurer la face inférieure de la plaque inférieure (orientée vers le siège 40), ou s'étendre au-delà de cette face inférieure en formant une saillie. Le diamètre de la plus petite section du cône est égal ou supérieur au diamètre du support du revêtement.

Les deux plaques 66, 65 sont montées pour pivoter l'une par rapport à l'autre entre, d'une part, une configuration d'ouverture dans laquelle les deux plaques sont écartées l'une de l'autre pour permettre l'insertion ou le remplacement de la membrane 62 et, d'autre part, une configuration de fermeture dans laquelle les deux plaques 66, 65 sont plaquées l'une contre l'autre.

Les plaques 66, 65 sont montées l'une sur l'autre au moyen de charnières 76, 77 qui confèrent à la plaque supérieure 66 la mobilité de pivotement PIV3 relativement à la plaque inférieure 65 autour d'un axe de pivotement A6. Il est également prévu une poignée 75 sur la plaque supérieure 66 qui permet à l'opérateur de se saisir de la plaque supérieure 66 pour la faire pivoter autour de l'axe de pivotement A6. Il est également prévu des moyens de verrouillage et de serrage 83, 84 des deux plaques dans leur configuration de fermeture. Les moyens de verrouillage et de serrage 83, 84 comportent un crochet 83 monté sur la poignée 75 de manière à être emboîté avec un élément de blocage 84 solidaire de la plaque inférieure 65.

Dans la configuration de fermeture, les deux plaques 66, 65 sont plaquées l'une contre l'autre de telle manière que, d'une part, la chambre de pressurisation 80 de la première plaque 65 et l'ouverture de protrusion 71 de la seconde plaque 66 soient situées en regard de la partie gonflable 62B de la membrane 62, et que, d'autre part, la partie périphérique de maintien 62A de la membrane 62 soit maintenue par pincement entre les deux plaques 66, 65.

La plaque inférieure 65 comporte, en renfoncement, des logements circulaires 81, 82, étagés, c'est-à-dire situés à des profondeurs différentes et de différents diamètres, centrés sur l'ouverture de protrusion de la plaque inférieure 65. Ces logements circulaires 81, 82, sont ainsi aptes à accueillir des membranes de diamètre correspondant à celui des logements circulaires 81, 82. La plaque supérieure 66 comporte également, en saillie, des parties annulaires 85, 86, étagées de diamètre correspondant au diamètre des logements circulaires 81, 82. Les parties annulaires 85, 86 sont destinées à coincer la partie périphérique 62A de la membrane 62 dans le logement circulaire 81, 82 correspondant.
Cette partie périphérique 62A de la membrane 62 constitue ainsi la partie de maintien 62A de la membrane, et la partie centrale 62B de la membrane, qui est libre, constitue la partie gonflable 62B, ou partie de gonflage, de cette membrane.

L'ouverture de protrusion 71 permet de guider latéralement la déformation de la partie de gonflage 62B de la membrane lors de son gonflement.

En variante, on peut également prévoir que l'ouverture centrale traversante de la plaque inférieure présente des parois évasées conçues pour guider la partie de gonflage de la membrane, de manière à former l'ouverture de protrusion sans avoir besoin de recourir à un insert.

Il est prévu plusieurs inserts 68 présentant des ouvertures de protrusion 71 de différentes largeurs. L'opérateur peut ainsi sélectionner et disposer dans l'ouverture centrale traversante de la plaque inférieure 65 l'insert le mieux adapté pour l'application du revêtement sur la lentille.

Les deux plaques 65, 66 forment un sous-ensemble extractible 61. Ce sous-ensemble extractible 61 est monté sur des glissières 88 de manière à s'insérer et s'extraire d'un logement d'accueil associé 87 à la façon d'un tiroir. Ce logement d'accueil 87 est solidaire du châssis 69 de l'appareil d'application 6.

La plaque inférieure 65 est pourvue sur sa face latérale d'éléments 72, 74 qui viennent s'engager dans les glissières 88 lors du montage du sous-ensemble extractible 61 dans le logement d'accueil 87. Les éléments 72, 74 constituent également des moyens d'accroche du sous-ensemble extractible dans le logement d'accueil associé 87.

Bien entendu, durant l'opération de préparation et de transfert du revêtement sur la lentille, le sous-ensemble extractible 61 reste solidaire du châssis 69 de l'appareil d'application 6 du revêtement.

En pratique, après le traitement d'une série de l'ordre d'une trentaine de lentilles, la membrane est changée. On peut également prévoir de changer l'insert en fonction des caractéristiques de la lentille et/ou du support du revêtement.

L'appareil d'application 6 comporte des moyens de réglage 95 de la distance Z du siège de lentille 40 par rapport à la partie de maintien 62A de la membrane 62. Ces moyens de réglage 95 sont ici intégrés à l'unité de traitement électronique et informatique 94.

Les moyens de réglage 95 comportent ici des moyens de détermination 96, électriques, aptes à déterminer la position à régler du siège de lentille 40 par rapport à la membrane. Ici, ces moyens de réglage peuvent comprendre une carte électronique implantée dans l'unité de traitement électronique 94.

Les moyens de réglage 95 comportent également des moyens de commande 97, 98 de la position du siège de lentille 40 par rapport à la partie de maintien 62A de la membrane, qui sont pilotés par des moyens de pilotage 99. Ici les moyens de pilotage comportent une carte électronique implantée dans l'unité de traitement électronique et sont conçus et programmés de telle sorte que le siège de lentille 40 soit déplacé à la position déterminée par les moyens de détermination 96.

Ces moyens de commande 97, 98 comportent un vérin 97 d'axe A9 à une extrémité duquel est fixé le siège de lentille 40, ainsi qu'un moteur 98 relié à l'autre extrémité du vérin 97 pour déplacer ce vérin 97 et donc le siège de lentille 40 en translation TR2 le long de l'axe A9 du vérin 97.

Procédé de préparation et de transfert du revêtement sur la lentille

L'opérateur dépose le support 60 de revêtement 63 avec son emballage 64 dans le logement 21 du carrousel 20. Ici, le support 60 de revêtement 63 présente une face inférieure 60B sur laquelle est disposé le revêtement 63 à appliquer sur la face concave 108 de la lentille 100 et une face supérieure 60A opposée.

Le support 60 est flexible et sa face inférieure 60B présente une configuration géométrique semblable à celle de la face concave 108 de la lentille 100, c'est-à-dire que cette face inférieure 60B est concave, de courbure semblable à celle de la face concave 108 de la lentille. Préférentiellement, la face inférieure 60B du support 60 présente un rayon de courbure un peu plus important que celui de la face concave 108 de la lentille de telle sorte que la partie périphérique du revêtement ne touche la partie périphérique de la lentille qu'une fois la partie centrale du revêtement 63 correctement appliquée sur la partie centrale de la face concave 108 de la lentille.

L'opérateur positionne la lentille 100 munie de son bloc de maintien dans le logement 23 de la fourchette 22.

Comme rappelé ci-dessus, le bloc de maintien 101 est équipé d'une forme de détrompage et le logement 23 de la fourchette 22 présente la forme correspondante de détrompage du bloc de maintien de manière à permettre le positionnement précis du bloc de maintien 101 dans le logement 23 en conservant le référentiel de la lentille 100.

### Préhension du support de revêtement

Le carrousel 20 pivote pour positionner le logement 21 qui accueille le support 60 de revêtement et son emballage 64 en vis-à-vis de l'appareil de manipulation 7 du revêtement. Le moyen de préhension 73, est déplacé, au moyen de ses mobilités de translation le long et de pivotement autour de l'axe A7, pour saisir le support 60. Puis, le moyen de préhension 73 est remonté de manière à extraire le support 60 de son emballage 64.

### Nettoyage de la lentille

Une fois le support 60 extrait de son emballage 64 et maintenu par le préhenseur 73, le carrousel 20 pivote pour positionner le logement 23 de la fourchette 22, qui accueille la lentille 100 et son bloc de maintien 101, en vis-à-vis de l'appareil de nettoyage 3. Au moyen des mobilités de pivotement PIV2 et de translation TR1 de la fourchette 22, la lentille 100 est positionnée dans l'appareil de lavage 3. La lentille 100 et son bloc de maintien 101 sont saisis et positionnés dans le réceptacle 31 adapté à maintenir la lentille 100 suivant une orientation connue, au moyen, par exemple, d'une partie du réceptacle dont la forme est complémentaire de la forme de l'élément de détrompage du bloc de maintien 101.

Une fois la lentille 100 et son bloc de maintien 101 disposés dans l'appareil de lavage 3, des jets d'eau sont projetés sur la lentille 100. Puis la lentille 100 est séchée par centrifugation.

### Dépôt de colle

Le carrousel 20 pivote dans le sens trigonométrique pour positionner le logement 23 de la fourchette 22 qui accueille la lentille 100 et son bloc de maintien 101 en vis-à-vis de l'appareil de dépôt de colle 5.

Le référentiel optique de la lentille 100 étant conservé, la configuration géométrique de la face concave 108 de la lentille 100 est toujours entièrement connue. Le déplacement de la lentille 100, au moyen des mobilités de translation TR1 le long de l'axe de la potence 24 et de pivotement PIV2 autour de cet axe A2, est alors piloté par l'unité de traitement électronique, en accord avec la configuration géométrique de la lentille 100 de telle sorte que le nez 52 de la seringue 51 de colle durcissable ne touche pas la lentille 100 et de telle sorte qu'il n'y ait pas de formation de gouttes de colle sur la lentille 100. Le déplacement de la lentille 100 relativement par rapport à la seringue de colle est ainsi piloté pour déposer des traits de colle ou des points de colle à des endroits localisés et précis de la face concave 108 de la lentille 100.

Le dépôt de colle 46 est ainsi réalisé en trois dimensions sur la lentille 100 pour suivre la courbure de la lentille 100. En particulier, ce dépôt de colle est réalisé en continu et à distance maîtrisée de la lentille 100 pour ne pas créer de gouttes de colle.

### Transfert de revêtement

Le carrousel 20 pivote dans le sens trigonométrique pour positionner la lentille 100 et son bloc de maintien 101, en vis-à-vis de l'appareil d'application 6 du revêtement 63. La lentille est alors déposée, au moyen des mobilités de pivotement et de translation de la fourchette 22, dans le siège de lentille 40.

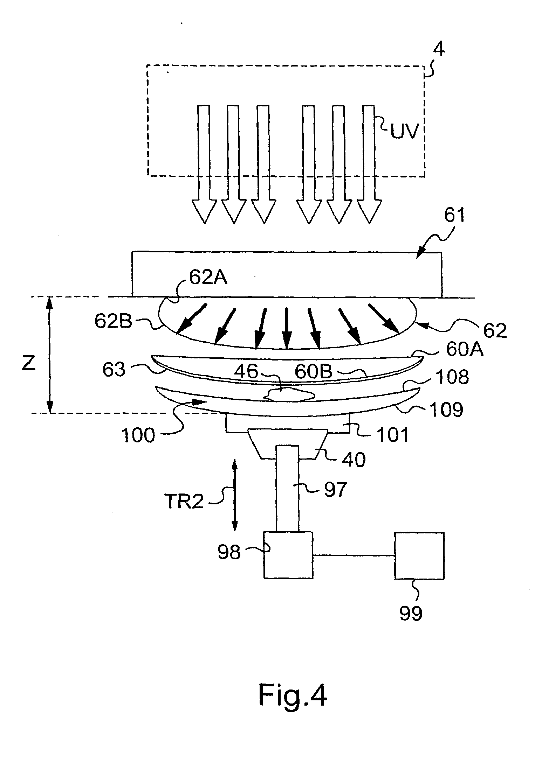

Puis, le support 60 du revêtement 63 est délicatement déposé, du côté de la face inférieure 60B qui porte le revêtement 63, par le moyen de préhension 73 de l'appareil de manipulation 7, sur la face concave 108 de la lentille 100 sur laquelle a été déposée la colle 46 durcissable (figure 4).

Les moyens de réglage 95 sont alors utilisés pour régler la position de la lentille 100 par rapport à la membrane 62, ce réglage étant distinct du gonflage de la membrane 62. A cet effet, les moyens de détermination 96 déterminent la position à régler du siège de lentille par rapport à la membrane selon l'une ou plusieurs des caractéristiques physiques ou géométriques de la lentille. En variante, il est également possible de déterminer la position à régler du siège de lentille en fonction des caractéristiques physiques ou géométriques du revêtement lui-même et/ou de la membrane et/ou de l'insert.

Puis, la chambre de pressurisation des moyens de gonflage 61 est pressurisée et la membrane gonfle (figure 4) pour sortir en hernie par l'ouverture de protrusion 71 de la plaque inférieure 65. La partie centrale de la membrane 62 appuie tout d'abord sur la partie centrale de la face supérieure 60B du support qui transmet l'effort de pression à la partie centrale de la face concave 108 de la lentille prépositionnée. Puis la membrane 62 exerce en se gonflant un effort de pression qui s'étend progressivement du centre vers la périphérie de la face concave 108 de la lentille (par l'intermédiaire du support 60). Le revêtement 63 est donc appliqué sur la lentille 100 du centre de la lentille vers sa périphérie en même temps que la colle 46 est chassée du centre vers la périphérie de la lentille.

## Revendications

1. Appareil pour appliquer sur une face (108) d'une lentille (100) un film de revêtement (63) préalablement déposé sur la face concernée de la lentille, comportant :
- un siège (40) apte à accueillir la lentille (100),
- une membrane (62) comprenant une partie périphérique de maintien (62A) et une partie gonflable (62B),
- des moyens de gonflage (61) de la membrane (62) en direction du siège (40) de la lentille (100),
**caractérisé en ce que** les moyens de gonflage (61) comportent une première plaque (66) et une seconde plaque (65) entre lesquelles est disposée la membrane (62), la première plaque présentant, en renfoncement, une chambre de pressurisation (80) reliée à une source de gaz comprimé (93) et la seconde plaque présentant une ouverture de protrusion (71), et **en ce qu'**il comporte des moyens de liaison mécanique (76, 77, A6) des plaques (65, 66) entre elles permettant leur mobilité relative entre une configuration d'ouverture dans laquelle les deux plaques sont écartées l'une de l'autre pour permettre l'insertion ou le remplacement de la membrane (62) et une configuration de fermeture dans laquelle les deux plaques (65, 66) sont plaquées l'une contre l'autre de telle manière que, d'une part, la chambre de pressurisation (80) de la première plaque (65) et l'ouverture de protrusion (71) de la seconde plaque (66) soient situées en regard de la partie gonflable (62B) de la membrane (62), et que, d'autre part, la partie périphérique de maintien (62A) de la membrane (62) soit maintenue par pincement entre les deux plaques (65, 66), les moyens de liaison mécanique (76, 77, A6) des plaques (65, 66) étant tels que la liaison mécanique qu'ils exercent est conservée en configuration d'ouverture.

2. Appareil selon la revendication précédente, **caractérisé en ce que** les deux plaques (65, 66) sont montées pour pivoter l'une par rapport à l'autre entre leurs configurations d'ouverture et de fermeture.

3. Appareil selon l'une des revendications précédentes, **caractérisé en ce qu'**il comporte des moyens de verrouillage et de serrage (83, 84) des deux plaques dans leur configuration de fermeture.

4. Appareil selon la revendication précédente, **caractérisé en ce que** les moyens de verrouillage et de serrage (83, 84) sont distincts des moyens de liaison mécanique (76, 77, A6) des plaques (65, 66).

5. Appareil selon l'une des revendications précédentes, **caractérisé en ce que** l'ouverture de protrusion (71) de la seconde plaque (65) est évasée vers la membrane (62).

6. Appareil selon la revendication précédente, **caractérisé en ce que** l'ouverture de protrusion (71) de la seconde plaque (65) est tronconique.

7. Appareil selon l'une des revendications précédentes, **caractérisé en ce que** l'ouverture de protrusion (71) est ménagée dans un insert (68) amovible rapporté sur la seconde plaque (65).

8. Appareil selon la revendication précédente, **caractérisé en ce qu'**il comporte plusieurs inserts (68) présentant des ouvertures de protrusion (71) de différentes largeurs.

9. Appareil selon l'une des revendications précédentes, **caractérisé en ce que** la première plaque (66) comporte un hublot vitré (70) délimitant partiellement au moins la chambre de pressurisation (80) et apte à transmettre un rayonnement ultraviolet (UV).

10. Appareil selon l'une des revendications précédentes, **caractérisé en ce que** les deux plaques (65, 66) forment un sous-ensemble extractible (61).

11. Appareil selon la revendication précédente, **caractérisé en ce que** le sous-ensemble extractible (61) formé par les deux plaques (65, 66) est monté sur des glissières (88) de manière à s'insérer et s'extraire d'un logement d'accueil associé (87) à la façon d'un tiroir.

## Claims

1. A device for applying a coating film (63) on a face (108) of a lens (100), the film previously being placed on the face concerned of the lens, the device comprising:
· a seat (40) suitable for receiving the lens (100);
· a membrane (62) including a peripheral fixing portion (62A) and an inflatable portion (62B); and
· inflater means (61) for inflating the membrane (62) towards the seat (40) of the lens (100);
the device being **characterized in that** the inflater means (61) comprise a first plate (66) and a second plate (65) between which the membrane (62) is placed, the first plate presenting a setback pressurization chamber (80) connected to a source (93) of compressed gas, and the second plate presenting a protrusion opening (71), and **in that** it includes mechanical connection means (76, 77, A6) connecting the plates (65, 66) together while enabling them to move relative to each other between an open configuration in which the two plates are spaced apart from each other so as to enable the membrane (62) to be inserted or replaced, and a closed configuration in which the two plates (65, 66) are placed one against the other in such a manner that firstly the pressurization chamber (80) of the first plate (65) and the protrusion opening (71) of the second plate (66) are situated facing the inflatable portion (62B) of the membrane (62), and secondly the peripheral fixing portion (62A) of the membrane (62) is held by being pinched between the two plates (65, 66), the mechanical connection means (76, 77, A6) of the plates (65, 66) being such that the mechanical connection they provide is conserved in the open configuration.

2. A device according to the preceding claim, **characterized in that** the two plates (65, 66) are mounted to pivot relative to each other between their open and closed configurations.

3. A device according to either preceding claim, **characterized in that** it includes locking and clamping means (83, 84) for locking and clamping the plates in their closed configuration.

4. A device according to the preceding claim, **characterized in that** the locking and clamping means (83, 84) are distinct from the mechanical connection means (76, 77, A6) of the plates (65, 66).

5. A device according to any preceding claim, **characterized in that** the protrusion opening (71) of the second plate (65) flares towards the membrane (62).

6. A device according to the preceding claim, **characterized in that** the protrusion opening (71) of the second plate (65) is frustoconical.

7. A device according to any preceding claim, **characterized in that** the protrusion opening (71) is formed in a removable insert (68) fitted on the second plate (65).

8. A device according to the preceding claim, **characterized in that** it includes a plurality of inserts (68) presenting protrusion openings (71) of different widths.

9. A device according to any preceding claim, **characterized in that** the first plate (66) includes a glazed porthole (70) defining at least part of the pressurization chamber (80) and suitable for transmitting ultraviolet radiation (UV).

10. A device according to any preceding claim, **characterized in that** the two plates (65, 66) form an extractable subassembly (61).

11. A device according to the preceding claim, **characterized in that** the extractable subassembly (61) formed by the two plates (65, 66) is mounted on slides (88) in such a manner as to be inserted and extracted into and from an associated reception housing (87) like a drawer.

## Patentansprüche

1. Gerät zum Auftragen auf einer Seite (108) einer Linse (100) eines Beschichtungsfilms (63), der vorab auf der betreffenden Seite der Linse positioniert wird, mit:
- einer Fassung (40) zur Aufnahme der Linse (100),
- einer Membran (62), die einen peripheren Haltebereich (62A) und einen aufpumpbaren Bereich (62B) umfasst,
- Mittel zum Aufpumpen (61) der Membran (62) in Richtung der Fassung (40) für die Linse (100),
**dadurch gekennzeichnet, dass** die Mittel zum Aufpumpen (61) eine erste Platte (66) und eine zweite Platte (65) umfassen, zwischen denen die Membran (62) angeordnet ist, wobei die erste Platte in einer Vertiefung eine Druckausgleichskammer (80) aufweist, die mit einer Druckgasquelle (93) verbunden ist und die zweite Platte eine vorgeschobene Öffnung (71) aufweist, sowie **dadurch**, dass es mechanische Verbindungsmittel (76, 77, A6) zwischen den Platten (65, 66) aufweist, die eine relative Beweglichkeit zwischen einer geöffneten Ausführung, in der die beiden Platte voneinander entfernt sind, damit die Membran (62) eingesetzt oder ausgewechselt werden kann, und einer geschlossenen Ausführung, in der die zwei Platten (65, 66) derart aneinandergefügt sind, dass sich zum einen die Druckausgleichskammer (80) der ersten Platte (65) und die vorgeschobene Öffnung (71) der zweiten Platte (66) gegenüber dem aufpumpbaren Bereich (62B) der Membran (62) befinden, und zum anderen der periphere Haltebereich (62A) der Membran (62) durch Einklemmen zwischen den beiden Platten (65, 66) gehalten wird, wobei die mechanischen Verbindungsmittel (76, 77, A6) der Platten (65, 66) derart sind, dass die mechanische Verbindung, die sie bilden, in geöffneter Ausführung bewahrt wird.

2. Gerät nach vorausgehendem Anspruch, **dadurch gekennzeichnet, dass** die beiden Platten (65, 66) so montiert sind, dass sie zueinander zwischen ihrer geöffneten und geschlossenen Ausführung geschwenkt werden können.

3. Gerät nach einem der vorausgehenden Ansprüche, **dadurch gekennzeichnet, dass** es Verriegelungs- und Einspannmittel (83, 84) für die beiden Platten in ihrer geschlossenen Ausführung umfasst.

4. Gerät nach vorausgehendem Anspruch, **dadurch gekennzeichnet, dass** sich die Verriegelungs- und Einspannmittel (83,84) von den mechanischen Verbindungsmitteln (76,77,A6) der Platten (65,66) unterscheiden.

5. Gerät nach einem der vorausgehenden Ansprüche, **dadurch gekennzeichnet, dass** die vorgeschobene Öffnung (71) der zweiten Platte (65) in Richtung Membran (62) erweitert ist.

6. Gerät nach vorausgehendem Anspruch, **dadurch gekennzeichnet, dass** die vorgeschobene Öffnung (71) der zweiten Platte (65) kegelstumpfförmig ist.

7. Gerät nach einem der vorausgehenden Ansprüche, **dadurch gekennzeichnet, dass** die vorgeschobene Öffnung (71) in einem abnehmbaren Einsatz (68) eingearbeitet ist, der auf die zweite Platte (65) aufgesetzt wird.

8. Gerät nach vorausgehendem Anspruch, **dadurch gekennzeichnet, dass** es mehrere Einsätze (68) mit vorgeschobenen Öffnungen (71) unterschiedlicher Breite umfasst.

9. Gerät nach einem der vorausgehenden Ansprüche, **dadurch gekennzeichnet, dass** die erste Platte (66) ein gläsernes Schutzfenster (70) umfasst, das die Druckausgleichskammer (80) zumindest teilweise abgrenzt und UV-Strahlen übertragen kann.

10. Gerät nach einem der vorausgehenden Ansprüche, **dadurch gekennzeichnet, dass** die beiden Platten (65,66) ein ausziehbares Teilsystem (61) bilden.

11. Gerät nach vorausgehendem Anspruch, **dadurch gekennzeichnet, dass** das aus den zwei Platten (65,66) gebildete ausziehbare Teilsystem (61) derart auf Schienen (88) montiert ist, dass es wie eine Schublade in ein zugeordnetes Aufnahmefach (87) eingeschoben und herausgezogen werden kann.
